# EUROPÄISCHE PATENTSCHRIFT

(11) **EP 3 968 483 B1**
(45) Veröffentlichungstag und Bekanntmachung des Hinweises auf die Patenterteilung: **22.10.2025**
(21) Anmeldenummer: 21201036.7
(22) Anmeldetag: 01.03.2013
(51) Int. Cl.: H02J 3/28, H02J 3/38, H02J 15/00

(54) **VERFAHREN ZUM BETREIBEN EINES KOMBIKRAFTWERKS BZW. KOMBIKRAFTWERK**
METHOD FOR OPERATING A COMBINED CYCLE POWER PLANT, AND COMBINED CYCLE POWER PLANT
PROCÉDÉ PERMETTANT DE FAIRE FONCTIONNER UNE CENTRALE ÉLECTRIQUE COMBINÉE ET CENTRALE ÉLECTRIQUE COMBINÉE

(30) Priorität: 02.03.2012 DE 102012203334
(43) Veröffentlichungstag der Anmeldung: 16.03.2022
(62) Teilanmeldung aus: 13707007.4
(73) Patentinhaber: Wobben Properties GmbH, 26607 Aurich (DE)
(72) Erfinder: Beekmann, Alfred, 26639 Wiesmoor (DE)
(74) Vertreter: Eisenführ Speiser

(56) Entgegenhaltungen:
- EP-A2- 1 739 824
- WO-A1-2010/048706
- WO-A2-2010/108910
- WO-A2-2011/060953
- CA-A1- 2 511 632
- CA-A1- 2 797 893
- DE-A1- 102009 018 126

## Beschreibung

Windenergieanlagen kommen dabei als Einzelanlagen vor oder als Windpark, bestehend aus einer Vielzahl einzelner Windenergieanlagen. An solche Energieerzeugungseinrichtungen wie Windenergieanlagen, aber auch Solaranlagen und dergleichen, wird vermehrt die Forderung gestellt, dass diese dann, wenn die Frequenz des elektrischen Netzes, in welches die Windenergieanlage, der Windpark oder die Solaranlage ihre elektrische Leistung einspeist, einen bestimmten Netzfrequenzwert, welcher unterhalb des Sollwerts liegt, unterschreitet, einen erhöhten Leistungsbeitrag in das Netz einspeist, um auf diese Weise das Netz zu stützen.

Bekanntlich liegt die Sollfrequenz eines elektrischen Netzes im deutschen bzw. europäischen Verbundnetz bei 50 Hz, in den U.S.A. bei 60 Hz. Andere Länder haben entsprechende Regelungen übernommen.

Diese Sollfrequenz kann relativ gut erreicht werden, wenn die durch die Verbraucher, die an das Netz angeschlossen sind, bezogene Leistung in etwa so groß ist wie die elektrische Leistung, die durch Erzeugungseinheiten erzeugt wird und die in das elektrische Netz eingespeist wird.

Mithin ist der Wert der Netzfrequenz immer auch ein Maß für die Ausbalancierung der elektrischen Erzeugung einerseits und des elektrischen Verbrauchs andererseits.

Übersteigt aber der Verbrauch die Erzeugung, wird also mehr elektrische Leistung aus dem Netz bezogen als in das elektrische Netz eingespeist wird, so sinkt die Netzfrequenz.

Hierfür sieht die Steuerung und das Netzmanagement des elektrischen Netzes verschiedenste Maßnahmen vor, um das Netz zu stützen, insbesondere dem Absinken der Netzfrequenz entgegenzuwirken, so dass der Wert der Frequenz wiederum in den Bereich des Sollwertes kommt.

Unterschreitet aber die Netzfrequenz einen vorbestimmten ersten Netzfrequenzwert, z. B. 49 Hz oder 48 Hz (dieser erste vorbestimmte Netzfrequenzwert kann einen ganz unterschiedlichen konkreten Wert annehmen, welcher regelmäßig von der konkreten Netz-topologie des Netzes abhängt), werden seitens des Netzmanagements bestimmte Maßnahmen ergriffen, z. B. werden auch steuerbare Großverbraucher in ihrem Leistungsbezug reduziert oder gar ganz vom Netz getrennt und/oder bestimmte Reservekraftwerke werden in Betrieb genommen und deren Leistung wird nach oben gefahren.

Windenergieanlagen oder auch Solareinrichtungen, welche elektrische Leistung erzeugen, sind zwar in der Lage, bei Unterfrequenz in einer besonderen Weise netzstützend tätig zu werden, aber dies reicht oft nicht aus.

Es ist zwar bereits der Vorschlag gemacht worden, Windenergieanlagen unterhalb ihres Optimums, also unterhalb ihrer Leistungskurve, zu betreiben, so dass im Falle einer Unterfrequenz eine Leistungsreserve zugeschaltet werden kann, eine solche Lösung ist jedoch wenig effektiv, weil dies auch bedeutet, dass für den Zeitraum, in dem die erste vorbestimmte Netzfrequenz nicht unterschritten wird, die Energie- bzw. Leistungsausbeute der Windenergieanlage nur suboptimal ist und somit ein großer Betrag elektrischer Leistung, die Windenergie liefern könnte, gar nicht erzeugt wird, was insgesamt die Effizienz der Windenergieanlage erheblich mindert.

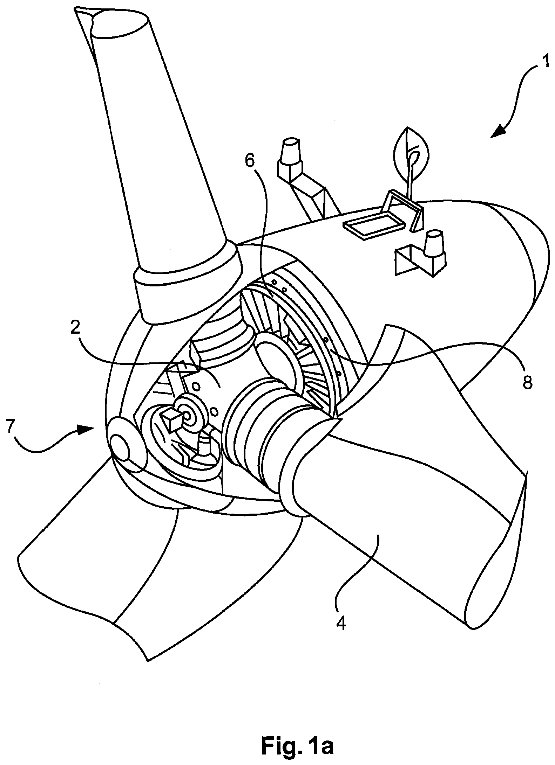

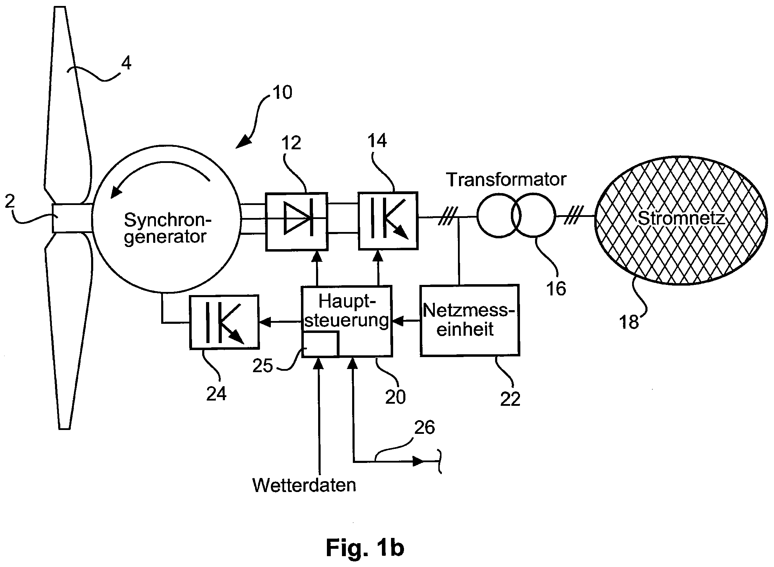

Auch ist bereits der Vorschlag gemacht worden, im Falle einer bestimmten Unterfrequenz kurzzeitig für einige bestimmte Zeit, z. B. einige hundert Millisekunden oder einige wenige Sekunden, mehr elektrische Leistung aus dem Generator einer Windenergieanlage herauszuziehen als dieser durch den Wind zu erzeugen in der Lage ist. Dies ist aufgrund der Trägheit (Inertia) des Generators durchaus möglich, führt aber auch dazu, dass der Generator nach der erhöhten Leistungsabgabe (Inertia-Betrieb) deutlich weniger elektrische Leistung abgibt. Ein typisches Beispiel für den Wirkleistungsverlauf einer Windenergieanlage mit Inertia-Emulation ist in Fig. 1 gezeigt ("Windblatt 03/2010", Seiten 8 und 9).

Eine ähnliche wie in der vorgenannten Quelle offenbarte Lösung ist auch WO 2010/108910 oder WO 01/86143 zu entnehmen.

Weiterhin wird auf die Dokumente DE 10 2009 018126 A1, WO 2010/048706A1, CA 2,511,632 A1 und WO 2011/060953 verwiesen.

Mithin kann der bisherige Ansatz, letztlich die momentane Reserve aus der rotierenden Schwungmasse von Rotor und Generator der Windenergieanlage zu nutzen, bestenfalls dazu führen, dass für einen Bereich von 10 bis 20 Sekunden eine erhöhte Leistung in das Netz eingespeist werden kann.

Problematisch ist dabei aber auch, dass es einige hundert Millisekunden, wenn nicht gar Sekunden, braucht, bis nach Auslösung des Schaltereignisses - z. B. Unterschreiten des ersten vorbestimmten Netzfrequenzwertes, z. B. 49,7 Hz, - und/oder Überschreiten eines vorbestimmten Frequenzgradienten (ΔF/Δt), der erhöhte Leistungsverbrauch zur Verfügung gestellt werden kann.

Es ist mithin Aufgabe der vorliegenden Erfindung, die bisherige Stützung des Netzes in Form einer Inertia-Emulation zu verbessern, insbesondere die Reaktionszeit bei Unterschreiten einen vorbestimmten Netzfrequenzwertes und/oder bei Überschreiten eines bestimmten Frequenzabfallgradienten, zu verringern und insbesondere auch in einem solchen Fall die elektrische Leistungserhöhung für einen längeren Zeitraum als bisher zur Verfügung zu stellen, um somit für den Fall einer Unterfrequenz bzw. eines bestimmten Frequenzabfalls (Frequenzgradienten) besser als bisher das Netz zu stützen, insbesondere einen Beitrag zur Frequenzstabilität zur Verfügung zu stellen.

Die Aufgabe wird gelöst mit einem Verfahren nach Anspruch 1 bzw. einer Vorrichtung nach Anspruch 5. Vorteilhafte Weiterbildungen sind in den Unteransprüchen beschrieben.

Bei der bekannten Inertia-Emulation mittels einer Windenergieanlage beträgt die Reaktionszeit, also die Zeit zwischen dem auslösenden Ereignis, z. B. Unterschreiten eines vorbestimmten Netzfrequenzwertes oder Überschreiten eines vorbestimmten Netzfrequenzabfalls (Frequenzgradient), ca. 200 bis 500 oder gar 600 Millisekunden.

Mit der Erfindung kann diese Reaktionszeit drastisch reduziert werden, z. B. auf Werte im Bereich von wenigen Millisekunden, z. B. 5 bis 10 Millisekunden, weniger als 20 oder weniger als 100 ms.

Somit wird deutlich schneller zusätzliche Leistung im Unterfrequenzfall und/oder im Fall eines vorbestimmten Netzfrequenzabfalls (Frequenzgradienten) zur Verfügung gestellt als bisher.

Der Grund für die deutlich schnellere Reaktionszeit besteht darin, dass wie bisher die Netzfrequenz wie aber auch der Netzfrequenzgradient, ständig gemessen wird, z. B. kann alle 200 Mikrosekunden (µs) die Netzfrequenz erfasst werden und ebenso schnell, eventuell etwas langsamer, kann auch der Frequenzabfall, also der Frequenzgradient, erfasst werden.

Wenn diese Schalt- bzw. Auslösekriterien, also das Unterschreiten einer vorbestimmten Netzfrequenz, z.B. 49,8 Hz, und/oder das Überschreiten eines vorbestimmten Netzfrequenzabfalls (Frequenzgradienten), z.B. 20-30 mHz/s, festgestellt werden, wird in einer Steuer- und Datenverarbeitungseinrichtung, die die vorgestellten genannten Werte erfasst und feststellt, ein Steuersignal erzeugt werden und dieses wird dazu verwendet, instantan an die Steuereinrichtung einer Power-to-Gas-Einheit weitergeleitet zu werden, wo der Leistungsbezug aus dem Netz der Power-to-Gas-Einheit durch Blockieren und/oder Öffnen von Schaltern, z.B. IGBT (Insolated Gate Bipolar Transistor), eines Gleichrichters der Bezug von elektrischer Energie aus dem Netz gestoppt werden kann, wobei hierzu keine galvanische Trennung der Power-to-Gas-Einheit vom Netz notwendig ist. Die Power-to-Gas-Einheit bedarf für die Elektrolyse insbesondere eines Gleichstroms, welcher bei Anschluss an das Netz durch einen Gleichrichter zur Verfügung gestellt werden kann. Dieser Gleichrichter weist die vorgenannten Schalter, z. B. vom IGBT-Typ, auf und wenn diese Schalter geöffnet bzw. ausgeschaltet werden, wird der Fluss von elektrischer Leistung aus dem Netz sofort gestoppt und somit steht die zuvor verbrauchte elektrische Leistung der Power-to-Gas-Einheit entsprechend schnell auch dem Netz zusätzlich zur Verfügung.

Mithin ermöglicht die Erfindung eine Reaktion auf einen Unterfrequenzfall oder auf einen vorbestimmten Netzfrequenzabfall (Frequenzgradienten), wobei die Reaktionszeit um mehr als eine Zehnerpotenz schneller ist als bisher (200-600 ms) und somit kann insbesondere bei einem starken Frequenzabfall, z. B aufgrund des Ausfalls eines Großkraftwerks von 1000 MW, sofort diesem entgegengewirkt werden, um das Erreichen bestimmter Unterfrequenzwerte zu vermeiden. Werden nämlich bestimmte Unterfrequenzwerte erreicht, z. B. ein Frequenzwert von 49 Hz, werden durch die Netzsteuerung automatisch bestimmte Lasten abgeworfen und insgesamt ergibt sich dadurch eine weitere Instabilität des gesamten elektrischen Netzes, so dass weitere Maßnahmen ergriffen werden müssen, um das gesamte Netz zu stabilisieren.

Der konkrete Wert, der für die Unterfrequenz eingestellt wird, damit wie vorgeschlagen der Bezug von elektrischer Leistung durch die Power-to-Gas-Einheit gestoppt wird, ist bei jedem Projekt individuell festzulegen. In einem Verbundnetz beispielsweise dürfte ein bevorzugter Unterfrequenzwert bei ca. 49,8 Hz liegen.

In einem Inselnetz hingegen sollte dieser Unterfrequenzwert geringer ausgelegt werden, z. B. bei 49 oder gar 48 Hz.

Auch kann der Wert für den Frequenzabfall, also für den negativen Frequenzgradienten, individuell eingestellt werden. Es ist dabei wünschenswert, dass dieser Frequenzabfall bzw. negative Frequenzgradient, im Bereich von 20 bis 50 mHz pro Sekunde oder bis zu 1 bis 2 Hz/sec. liegt. Werte für höhere Frequenzgradientenwerte sind zwar möglich, werden aber dazu führen, dass dieses Auslöse-/Schaltereignis oft nicht erreicht wird.

Indem, wie beschrieben, die Power-to-Gas-Einheit abhängig von dem Vorliegen eines vorbestimmten Frequenzereignisses im elektrischen Netz gesteuert wird, kann in erheblichem Maß zur Netzstützung beigetragen werden.

Besonders vorteilhaft ist es dabei, die Power-to-Gas-Einheit als Teil eines Kombikraftwerks zu betreiben, wobei innerhalb des Kombikraftwerks die elektrische Leistung erzeugt wird, die auch von der Power-to-Gas-Einheit verbraucht wird und wobei die Leistung, die innerhalb des Kombikraftwerks erzeugt wird, die aber nicht von der Power-to-Gas-Einheit verbraucht wird, in ein angeschlossenes elektrisches Netz eingespeist wird, z. B. auch als verstetigte Leistung.

Dabei ist es bevorzugt, dass der Verbrauch der Power-to-Gas-Einheit im normalen Betriebsfall ca. 2 bis 10%, vorzugsweise ca. 5% der Anlagenleistung der elektrischen Erzeuger des Kombikraftwerks beträgt.

Weist das Kombikraftwerk beispielsweise eine Windenergieanlage mit einer Nennleistung von 5 MW auf, sollte also der Nennverbrauch der Power-to-Gas-Einheit im Bereich von ca. 300 bis 500 kW liegen.

Die Power-to-Gas-Einheit kann auf verschiedene Weise mit dem elektrischen Erzeuger des Kombikraftwerks verbunden werden. Es ist beispielsweise möglich, den elektrischen Anschluss der Power-to-Gas-Einheit an die Ausgangsklemme der Windenergieanlage, des Windparks oder der Solareinrichtung (Photovoltaik) zu verlegen. Es ist aber auch möglich, dass dann, wenn die Windenergieanlage oder der Windpark einen Gleichstromzwischenkreis aufweist, den elektrischen Anschluss der Power-to-Gas-Einheit in diesen Zwischenkreis zu legen, was den Vorteil hätte, dass keine Wechselrichtung mehr erfolgen muss. Es ist aber auch möglich, dass die Power-to-Gas-Einheit an das elektrische Netz angeschlossen ist und von dort die elektrische Leistung bezieht und da die elektrische Erzeugungseinheit des Kombikraftwerks ihre elektrische Leistung in dieses Netz einspeist, kann dadurch auch durchaus eine gewisse räumliche Distanz zwischen der Erzeugungseinheit des Kombikraftwerks, also einer Windenergieanlage, einem Windpark oder einer Solareinrichtung, und der Power-to-Gas-Einheit bestehen, wenn die Erzeugungseinheit wie auch die Power-to-Gas-Einheit an das Netz angeschlossen sind und darüber hinaus die Erzeugungseinheit und die Power-to-Gas-Einheit über entsprechende Steuer-, Daten- oder Kommunikationsleitungen, seien sie drahtbehaftet (LWL-Lichtwellenleisten) oder drahtlos, miteinander verbunden sind, um im Fall der Unterschreitung einer vorbestimmten Unterfrequenz oder im Falle der Überschreitung eines vorbestimmten Netzfrequenzabfalls erfindungsgemäß vorgeschlagen, die dem Netz zur Verfügung stehende Leistung zu erhöhen.

Solange kein Unterfrequenzfall oder auch kein vorbestimmter Netzfrequenzabfall (Frequenzgradient) vorliegt, bezieht die Power-to-Gas-Einheit in einer kontrollierten Weise elektrische Leistung und erzeugt hieraus ein Gas, sei es Wasserstoff oder Methan oder dergleichen. Eine solche Power-to-Gas-Einheit, bei welcher aus elektrischer Energie Gas erzeugt wird, ist z. B. von der Firma SolarFuel bekannt und auch in Fig. 1 in der Übersicht dargestellt.

Dabei kann der Energiebezug der Power-to-Gas-Einheit, also der Bezug von elektrischer Energie dieser Power-to-Gas-Einheit, auch so eingestellt und gesteuert werden, dass der in einer Windenergieanlage über einen vorbestimmten Zeitraum (Prognosezeitraum) schwankende Anteil, welcher sich aus der ständigen Schwankung des Windes ergibt, in der Power-to-Gas-Einheit verbraucht wird, um somit Gas zu erzeugen.

Dabei lässt sich die Steuerung der Power-to-Gas-Einheit auf verschiedene Art und Weise vornehmen.

Zum Beispiel ist es möglich, dass die Power-to-Gas-Einheit stets und ständig eine ganz bestimmte elektrische Leistung bezieht, z. B. ihre Nennleistung, z. B. bei einer Power-to-Gas-Einheit von 1 MW Nennleistung wird dann stets eine elektrische Leistung von 1 MW bezogen und aus dieser elektrischen Leistung wird eine entsprechende Menge Gas ständig erzeugt.

Es ist aber auch möglich, den Bezug der Leistung so zu steuern, dass er abhängig ist von der elektrischen Leistung, die durch die Erzeugungseinheit im Kombikraftwerk erzeugt wird.

So lässt sich die Erzeugung auch so einstellen, dass die Power-to-Gas-Einheit bei einer entsprechenden Auslegung der Erzeugungseinheit zur Power-to-Gas-Einheit stets einen bestimmten Prozentsatz der erzeugten Leistung der Erzeugungseinheit bezieht, z. B. 10% oder 20% oder gar mehr der erzeugten Leistung.

Mithin ist es dann im Unterfrequenzfall bzw. im Fall der Überschreitung eines vorbestimmten Frequenzgradienten möglich, durch den Stopp der Elektrolyse bzw. Methani-sierung dem elektrischen Netz quasi instantan, in jedem Fall innerhalb weniger Millisekunden, eine größere elektrische Leistung zur Verfügung zu stellen, nämlich der 10 oder 20 oder mehr Prozent der erzeugten Leistung der Erzeugungseinheit.

Es ist auch möglich, dass die Power-to-Gas-Einheit so viel elektrische Energie von der Erzeugungseinheit bezieht, so dass diese einen vorbestimmten Betrag an elektrischer Leistung für eine vorbestimmte Zeit (Prognosezeit) konstant den Verbrauchern im elektrischen Netz zur Verfügung stellt, während hingegen die elektrische Leistung, die die Erzeugungseinheit nicht den Verbrauchern im elektrischen Netz zur Verfügung stellt, in der Power-to-Gas-Einheit verbraucht wird.

Mithin lässt sich erfindungsgemäß nicht nur das Netz im Falle einer Unterfrequenz stützen, sondern für den Normalbetrieb des Netzes im Bereich der Sollfrequenz kann auch eine konstante elektrische Grundlast in das Netz eingespeist werden und somit wird eine elektrische schwankende Last, die sich beispielsweise einstellt aufgrund der ständigen Schwankungen des Windes oder, bei einer Photovoltaik-Anlage, aufgrund der schwankenden Helligkeit gar nicht erst den Verbrauchern im Netz zur Verfügung gestellt und somit wird insbesondere ein schwankender Anteil der elektrischen Leistung der Erzeugungseinheit gar nicht in das Netz bzw. dessen Verbrauchern zur Verfügung gestellt. Damit ist das Kombikraftwerk über den beschriebenen netzstabilisierenden Unterfrequenzfall bzw. bei Überschreiten eines vorbestimmten Netzgradienten auch grundlastfähig und erhöht somit seine Netzeinspeise performance.

Die Erfindung schlägt vor, eine Power-to-Gas-Einheit zu betreiben, so dass dann, wenn ein erster Netzfrequenzwert unterschritten wird, z. B. ein Wert von 49 Hz, die Power-to-Gas-Einheit den Leistungsbezug aus dem Netz reduziert oder gar ganz einstellt, indem die Power-to-Gas-Einheit sogar vom Netz getrennt wird. Somit besteht weniger Millisekunden und dauerhaft ein deutlich höherer elektrischer Leistungsbeitrag dem Netz weiterhin zur Verfügung, welcher bis dato noch von der Power-to-Gas-Einheit vom Netz bezogen wurde.

Es ist, wie erwähnt, auch möglich, dass somit die Windenergieanlage oder der Windpark oder die Photovoltaik-Anlage so betrieben wird, dass sie stets für eine bestimmte vorgesehene Dauer, z. B. von 10 bis 30 Minuten, mit einer bestimmten konstanten Leistung elektrische Energie in das Netz einspeist und die elektrische Energie, die über den konstanten Beitrag hinaus von der Windenergieanlage oder dem Windpark oder der Photovoltaik-Anlage erzeugt wird, wird dann von der Power-to-Gas-Einheit abgenommen, so dass aus Netzsicht das Kombikraftwerk eine konstante elektrische Leistung erzeugt, jedenfalls für einen vorbestimmten Zeitraum, wobei dieser Zeitraum durch den Netzbetreiber über eine entsprechende Datenleitung oder durch den Betreiber der Windenergieanlage oder des Windparks oder der Photovoltaik-Anlage über eine entsprechende Datenleitung einstellbar ist und im Falle einer Unterschreitung oder des Erreichens des ersten Netzfrequenzwertes und/oder Überschreiten eines Frequenzabfalls wird dann wie vorbeschrieben der Bezug von elektrischer Leistung durch die Power-to-Gas-Einheit reduziert oder gänzlich eingestellt, so dass als Leistungsbeitrag stets die elektrische Leistung zur Verfügung steht, die zuvor von der Power-to-Gas-Einheit abgenommen wurde.

Der Vorteil der vorangestellten Lösung besteht nicht nur darin, dass damit stets ein "quasi Inertia-Beitrag" aus dem Kombikraftwerk abrufbar ist, sondern dass auch gleichzeitig eine Verstetigung der eingespeisten elektrischen Leistung möglich ist und somit das Kombikraftwerk in gewissen Grenzen sogar Grundlast an das Netz abliefern kann.

Zur Festlegung der Dauer der konstant einzuspeisenden Leistung werden auch meteorologische Daten verwendet.

Ein Beispiel mag dies verdeutlichen:
Wenn beispielsweise die aktuelle Windgeschwindigkeit 7m/sec. beträgt und eine meteorologische Prognose dahingehend vorliegt, dass innerhalb der nächsten 30 Minuten die Windgeschwindigkeit nicht unter 5m/sec. fällt, wird der Wert von 5m/sec., evtl. mit einem Sicherheitsabschlag, z. B. 4,5m/sec., als Maß für die abzugebende konstante elektrische Leistung eingegeben. Die elektrische Energie, die also aus den ersten 4,5m/sec. Windgeschwindigkeit bezogen wird, wird stets in das elektrische Netz konstant für z. B. 30 Minuten eingespeist.

Wann immer der Wind innerhalb des Prognosezeitraums von 30 Minuten, der nächsten 30 Minuten also, mit einer Stärke von mehr als 4,5m/sec. weht, wird die damit einhergehende erhöhte Windleistung wie üblich von einer Windenergieanlage ebenfalls "geerntet", aber die über die 4,5m/sec. werden zu der elektrischen Leistung gehende Energie wird direkt oder indirekt der Power-to-Gas-Einheit zur Verfügung gestellt.

Wenn durch Reduzierung des Leistungsbezugs der Power-to-Gas-Einheit und damit durch die damit einhergehende erhöhte Einspeisung elektrischer Leistung in das Netz (nicht bezogene Leistung kommt der erhöhten Einspeiseleistung gleich) und sich dadurch die Netzfrequenz schneller als bisher erholt, wird die Power-to-Gas-Einheit nicht sofort dann wieder eingeschaltet bzw. wird der Energiebezug nicht sofort wieder hochgefahren, wenn der erste Netzfrequenzwert überschritten wird, sondern damit wird gewartet, bis der Netzfrequenzwert wieder einen Wert annimmt, der dem Sollwert entspricht oder nahe dem Sollwert entspricht oder gar über dem Sollwert liegt, also einen Wert von mehr als 50 Hz angenommen hat.

Der Leistungsbezug der Power-to-Gas-Einheit wird also erst dann wieder hochgefahren, wenn sich die Netzfrequenz erholt hat und somit eine relativ hohe Netzstabilität wieder vorliegt.

Es ist auch bekannt, dass dann, wenn die Netzfrequenz einen bestimmten Wert überschreitet, z. B. 5‰ über ihrem Sollwert liegt, also bei ca. 50,25 Hz liegt, eine Reduktion der elektrischen Einspeisung der Windenergie vorgenommen wird und mit weiter ansteigender Netzfrequenz die eingespeiste Leistung der Windenergieanlage weiter reduziert wird.

Dies erfolgt im Stand der Technik regelmäßig durch Pitchen der Blätter oder indem vom Generator zur Verfügung gestellte elektrische Leistung in einem Chopper, also einem Widerstand, verbraucht wird, so dass letztlich eine verminderte elektrische Leistung in das Netz eingespeist wird.

Mittels des Kombikraftwerks ist es nun auch möglich, die Leistungsreduktion der Windenergieanlage durch letztlich erhöhten Leistungsbezug der Power-to-Gas-Einheit abzubilden.

Mithin reduziert bei Überschreiten einer Überfrequenz also die Windenergieanlage nicht die Abgabe der elektrischen Leistung, sondern die Power-to-Gas-Einheit nimmt einen höheren Leistungsbezug auf sich, so dass aus Netzsicht das Kombikraftwerk eine geringere Leistung in das Netz einspeist. Dabei ist alleine durch die Steuerung der Bezugsleistung der Power-to-Gas-Einheit die Leistungsreduzierung des Kombikraftwerks einstellbar. Durch dann einsetzendes Pitchen der Rotorblätter der Windenergieanlage oder durch Verschattung einer Photovoltaik-Anlage kann die Reduktion der Leistung noch deutlich erhöht werden, um somit auch bei Überfrequenz einen adäquaten Beitrag zur Frequenz- und damit zur Netzstabilität zu erbringen.

Wie beschrieben ist eine Power-to-Gas-Einheit in der Lage, aus elektrischem Strom Gas zu erzeugen, z. B. Wasserstoff oder Methan oder dergleichen, also ein Gas, welches für die Verbrennung, vor allem aber auch als Brennstoff für einen Motor geeignet ist. Bei der Installation großer Windparks sind ohnehin große Aggregate notwendig, die bislang regelmäßig mit Diesel, Benzin oder dergleichen betrieben werden. Wenn nun solche Aggregate auf die Verbrennung von Gas, z. B. CH₄ (Methan) umgestellt werden, kann das Gas, welches mit der Power-to-Gas-Einheit erzeugt wird, auch zum Antrieb der elektrischen Aggregate eingesetzt werden, mittels denen ein Windpark errichtet wird.

Wenn beispielsweise in einer abgelegenen Gegend eine Windenergieanlage errichtet wird, kann die elektrische Energie, die diese erste Windenergieanlage erzeugt, in einer Power-to-Gas-Einheit zur Erzeugung des Gases verwendet werden, so dass mit dem Gas die weiteren Windenergieanlagen des Windparks errichtet werden, indem das Gas den Antriebsaggregaten, also Kränen, Lkw, Fahrzeuge etc., zur Errichtung der Windenergieanlagen eines Windparks notwendig sind, zur Verfügung gestellt wird. Mithin würde der Windpark hochgradig keine fossilen Brennstoffe zur Errichtung benötigen, sondern könnte mit "grünem Gas", also z. B. Windgas in der beschriebenen Weise, errichtet werden, was insgesamt die Ökobilanz des Windparks verbessert. Gerade in abgelegenen Gegenden ist oftmals auch der Bezug von Brennstoffen ohnehin umständlich, oftmals jedenfalls schwierig und damit sind auch die Brennstoffe selbst sehr teuer und durch die Erzeugung von Brennstoff vor Ort können insofern auch die Brennstoffbezugskosten, die für die Aggregate zur Errichtung eines Windparks benötigt werden, verringert werden. Wenn die Power-to-Gas-Einheit dann in einem Container oder dergleichen untergebracht ist, kann nach Errichtung des Windparks der Container mit der Power-to-Gas-Einheit zur nächsten Baustelle transportiert werden.

Die Erfindung ist nachfolgend anhand eines Ausführungsbeispiels in Zeichnungen näher erläutert.
- Fig. 1a: zeigt den Blick auf eine Windenergieanlage,
- Fig. 1b: zeigt den typischen Aufbau und Anschluss einer Windenergieanlage,
- Fig. 2: zeigt den Blick auf ein Kombikraftwerk, bestehend aus einer Windenergieanlage und einer Power-to-Gas-Einheit,
- Fig. 3: zeigt den typischen Aufbau einer Power-to-Gas-Einheit im Energiesystem (Stand der Technik; SolarFuel),
- Fig. 4: zeigt ein Beispiel für die Leistungsverteilung vor und nach Unterschreiten eines vorbestimmten Unterfrequenzwertes,
- Fig. 5: zeigt die Verteilung der Leistungen des Kombikraftwerks vor und nach Überschreiten eines vorbestimmten Frequenzabfalls,
- Fig. 6: zeigt eine erfindungsgemäße Variante.

Gleiche Bezugszeichen können gleiche aber auch ähnliche, nicht identische Elemente nachfolgend bezeichnen. Nachfolgend wird der Vollständigkeit halber eine Windenergieanlage mit einem Synchrongenerator und getriebelosem Konzept mit einem Vollumrichter erläutert.

Fig. 1a zeigt schematisch eine Gondel 1 einer getriebelosen Windenergieanlage. Die Nabe 2 ist aufgrund der teilweise geöffnet dargestellten Verkleidung (Spinner) zu erkennen. An der Nabe sind drei Rotorblätter 4 befestigt, wobei die Rotorblätter 4 nur in ihrem nabennahen Bereich dargestellt sind. Die Nabe 2 mit den Rotorblättern 4 bildet einen aerodynamischen Rotor 7. Die Nabe 2 ist mit dem Rotor 6 des Generators, der auch als Läufer 6 bezeichnet werden kann und nachfolgend als Läufer 6 bezeichnet wird, mechanisch fest verbunden. Der Läufer 6 ist gegenüber dem Stator 8 drehbar gelagert.

Der Läufer 6 wird während seiner Drehung relativ zum Stator 8 bestromt, üblicherweise mit einem Gleichstrom, um dadurch ein magnetisches Feld zu erzeugen und ein Generatormoment bzw. Generatorgegenmoment aufzubauen, das durch diesen Erregerstrom entsprechend auch eingestellt und verändert werden kann. Ist der Läufer 6 somit elektrisch erregt, erzeugt seine Drehung gegenüber dem Stator 8 ein elektrisches Feld in dem Stator 8 und damit einen elektrischen Wechselstrom.

Der im Generator 10, der im Wesentlichen aus dem Läufer 6 und Stator 8 aufgebaut ist, erzeugte Wechselstrom wird gemäß dem in Fig. 1b gezeigten Aufbau über einen Gleichrichter 12 gleichgerichtet. Der gleichgerichtete Strom bzw. die gleichgerichtete Spannung wird dann mit Hilfe eines Wechselrichters 14 in ein 3-Phasensystem mit gewünschter Frequenz gewandelt. Das so erzeugte dreiphasige Strom-Spannungs-System wird mittels eines Transformators 16 in der Spannung insbesondere hochtransformiert, um in ein angeschlossenes Stromnetz 18 eingespeist zu werden. Theoretisch könnte auf den Transformator verzichtet werden oder dieser durch eine Drossel ersetzt werden. Üblicherweise sind die Spannungsanforderungen im Stromnetz 18 aber so, dass eine Hochtransformierung mittels Transformator erforderlich ist.

Zur Steuerung wird eine Hauptsteuerung 20 verwendet, die auch als Main-Control-Einheit bezeichnet werden kann und die oberste Regelungs- und Steuereinheit der Windenergieanlage bildet. Die Hauptsteuerung 20 erhält ihre Information unter anderem über die Netzfrequenz von der untergeordneten Netzmesseinheit 22. Die Hauptsteuerung steuert den Wechselrichter 14 sowie den Gleichrichter 12. Grundsätzlich könnte natürlich auch ein ungesteuerter Gleichrichtet verwendet werden. Außerdem steuert die Hauptsteuerung 20 einen Gleichstromsteller 24 zum Einspeisen des Erregerstroms in den Läufer 6, der Teil des Generators 10 ist. Die Hauptsteuerung 20 modifiziert unter anderem bei Unterschreiten eines vorgegebenen Netzfrequenzgrenzwertes die Einspeisung bzw. den Arbeitspunkt des Generators. Da der Generator drehzahlvariabel betrieben wird, erfolgt die Einspeisung in das Netz wie beschrieben mit einem Vollumrichter, der im Wesentlichen durch den Gleichrichter 12 und den Wechselrichter 14 gebildet wird.

Im Betrieb wird die Netzspannung und Netzfrequenz von der Netzmesseinheit 22 permanent dreiphasig gemessen. Aus der Messung ergibt sich - jedenfalls im Falle einer Netzfrequenz von 50 Hz - alle 3,3 ms ein neuer Wert für eine der 3 Phasenspannungen. Die Netzfrequenz wird somitje Spannungshalbwelle erfasst, gefiltert und mit den voreingestellten Grenzwerten verglichen. Für ein 60Hz-System wäre etwa für alle 2,7 ms, nämlich etwa zu jedem Nulldurchgang, ein Wert für eine der 3 Phasenspannungen verfügbar.

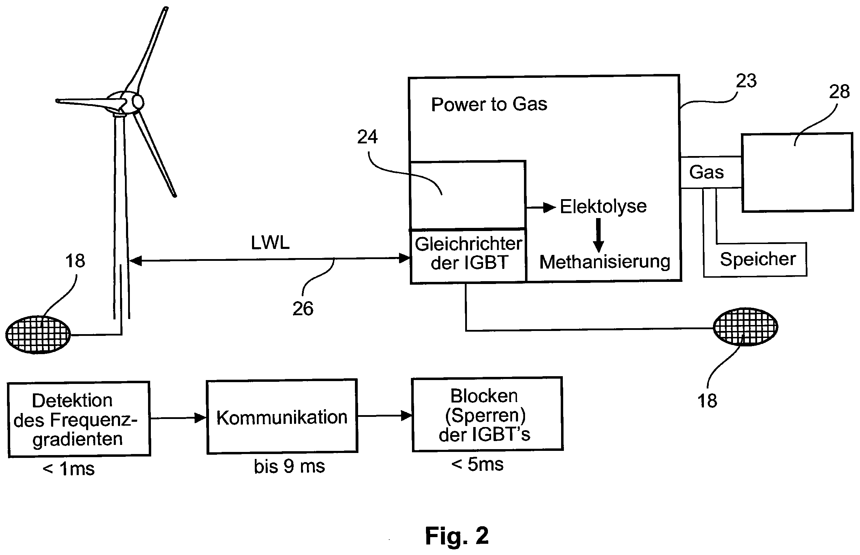

In Fig. 2 ist auch dargestellt, dass die Windenergieanlage mit einer Power-to-Gas-Einheit 23 elektrisch verbunden ist.

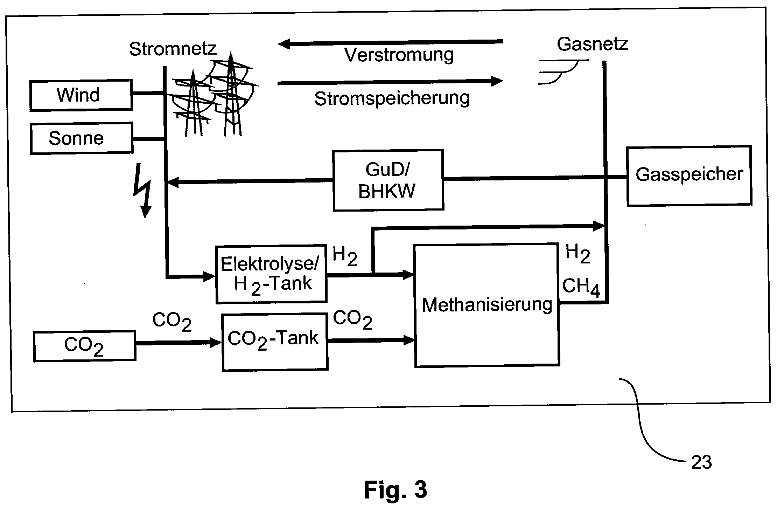

Eine solche Power-to-Gas-Einheit 23 als solches ist bereits in verschiedenen Formen bekannt, beispielsweise auch aus WO 2009/065577. Eine solche Power-to-Gas-Einheit ist auch bekannt von der Firma SolarFuel (www.SolarFuel.de) und ist auch in Fig. 3 schematisch dargestellt. An einer solchen Power-to-Gas-Einheit wird mittels einer Elektrolyse, wozu elektrische Leistung von einer Windenergieanlage, einer Solarquelle oder einer Biomassequelle (mit elektrischer Erzeugung) bezogen wird, zunächst Wasserstoff erzeugt und diese Power-to-Gas-Einheit 23 weist vorzugsweise auch eine Methanisierungseinheit auf, welche den erzeugten Wasserstoff unter Verwendung einer weiteren CO₂-Quelle dazu verwendet, Methangas (CH₄), herzustellen. Das erzeugte Gas, sei es Wasserstoff oder Methan, kann in einen Gasspeicher geleitet werden oder in ein Gasleitungsnetz, z. B. ein Erdgasnetz, eingespeist werden.

Schließlich weist die Power-to-Gas-Einheit 23 auch eine Steuerung 24 auf, welche über eine Kommunikationsleitung, sei es drahtbehaftet (z. B. Lichtwellenleisten LWL) oder drahtlos, mit der Hauptsteuerung 20 der Windenergieanlage verbunden ist.

Die Power-to-Gas-Einheit ist eine Einheit, in welcher elektrische Energie verbraucht wird, um letztlich ein Brenngas herzustellen.

Für die Erzeugung von Wasserstoff bedarf es beispielsweise üblicherweise der Elektrolyse, so dass die Power-to-Gas-Einheit dafür einen Elektrolysator aufweist, der elek-trische Energie verbraucht und somit Wasserstoff herstellt.

In der Power-to-Gas-Einheit kann auch Methan hergestellt werden, indem der Wasser-stoff und ein Kohlendioxid, welches beispielsweise aus der Luft gewonnen oder aus einem CO₂-Tank zur Verfügung gestellt wird oder aus einer angeschlossenen Biogas-anlage zur Verfügung gestellt wird, in einer Methanisierungseinheit Methangas (CH₄) her-stellt.

Dieses Methangas kann einem angeschlossenen Gasspeicher zur Verfügung gestellt werden oder auch in ein Gasnetz eingespeist werden.

Im in Fig. 3 dargestellten Beispiel ist auch ein Gas- und Dampfwerk bzw. ein Blockheizkraftwerk ausgebildet, in welchem das Verbrennungsgas in einem Verbrennungsmotor verbrannt wird, so dass in einem an den Verbrennungsmotor angeschlossenen elektrischen Generator wiederum elektrische Leistung erzeugt werden kann, die dann wiederum dem elektrischen Netz zur Verfügung gestellt werden kann.

Die Windenergieanlage kann eine Einzelanlage sein, sie kann aber auch stellvertretend für einen Windpark stehen, welcher aus einer Vielzahl von Windenergieanlagen besteht.

Die Windenergieanlage weist die Hauptsteuerung 20 mit einer Datenverarbeitungs- und Steuereinrichtung auf. Diese Datenverarbeitungseinrichtung weist unter anderem einen Dateneingang 25 auf, über den Windprognosedaten der Datenverarbeitungseinrichtung zur Verfügung gestellt werden. Die Datenverarbeitungseinrichtung 20 erstellt aus diesen Windprognosedaten für einen vorbestimmten Prognosezeitraum, z. B. 20, 30, 40, 50 oder 60 Minuten oder länger, eine Windprognose und kann aufgrund der erstellten Windprognose aufgrund der Verarbeitung der Leistungskurve der Windenergieanlage oder des Windparks auch sehr zuverlässig eine Prognoseleistung ermitteln, also eine elektrische Mindestleistung, die letztlich dem Netz zuverlässig konstant zur Verfügung gestellt werden kann.

Gleichzeitig ermittelt die Windenergieanlage oder der Windpark aktuell stets aufs Neue, z. B. in Abständen von 5 bis 10 Sekunden, die aktuelle elektrische Leistung der Windenergieanlage, welche vom aktuellen Wind abhängig ist.

Die aktuelle Leistung der Windenergie, die dabei oberhalb der Prognoseleistung (Mindestleistung) liegt, wird als Information, Datum, Signal etc. der Steuer- und Datenverarbeitungseinrichtung 24 der Power-to-Gas-Einheit 23 zugeführt, so dass der Power-to-Gas-Einheit 23 der elektrische Verbrauch vorgegeben wird.

Ist also z. B. in der Windenergieanlage oder in dem Windpark eine Prognoseleistung von 1 Megawatt (MW) festgelegt worden, erzeugt aber die Windenergieanlage oder der Windpark aktuell eine Leistung von 1,3 MW, so wird der Differenzbetrag, also 300 kW, als Wert ermittelt und die Steuer- und Datenverarbeitungseinrichtung 24 der Power-to-Gas-Einheit 23 erhält diesen Wert als Steuerwert, so dass dann entsprechend die Power-to-Gas-Einheit 23 mit einem Verbrauch von 300 kW betrieben wird.

Sinkt der Wind etwas und stellt sich nachfolgend nur noch eine aktuelle Leistung von 1,2 MW ein, sinkt auch entsprechend der elektrische Verbrauch der Power-to-Gas-Einheit auf 200 kW, steigt der Wind, so dass die Windenergieanlage oder der Windpark 1,4 MW erzeugt, so steigt der Verbrauch der Power-to-Gas-Einheit entsprechend auf 400 kW usw..

Nach Ablauf des Prognosezeitraums wird eine neue Prognose erstellt und für diese neue Prognose wird wiederum eine neue konstante Leistung (neue Prognoseleistung) festgelegt.

Durch die gemeinsame Datenleitung 26 zwischen der Steuer- und Datenverarbeitungseinrichtung der Windenergieanlage oder des Windparks einerseits und der Steuer- und Datenverarbeitungseinrichtung der Power-to-Gas-Einheit andererseits können auch aktuelle Winddaten oder die Daten über die Verbrauchsleistung der Power-to-Gas-Einheit ausgetauscht werden, um somit die konstante Bereitstellung der ins Stromnetz eingespeisten konstanten Mindestleistung zu gewährleisten.

Die Steuer- und Datenverarbeitungseinrichtung 20 ist darüber hinaus ferner auch mit einer Steuerung 27 oder einer Zentrale zur Steuerung des elektrischen Netzes des Stromnetzes verbunden, so dass dort stets die Wert der konstanten elektrischen Einspeisung in das elektrische Netz abgerufen werden können bzw. vorliegen.

Falls die aktuelle Windgeschwindigkeit und damit die aktuelle erzeugte elektrische Leistung der Windenergieanlage oder des Windparks unter die Prognoseleistung fällt, wird der elektrische Verbrauch der Power-to-Gas-Einheit auf "Null" (oder auf einen geringstmöglichen Wert) gefahren und gleichzeitig kann evtl. ein Dampf- und Gas-Dampfkraftwerk bzw. BHKW 28 angefahren werden, um zusätzlich elektrische Leistung zur Verfügung zu stellen, die nicht von der Windenergieanlage oder dem Windpark zur Verfügung gestellt werden kann, so dass im Ergebnis dem Stromnetz noch immer die elektrische Prognoseleistung zuverlässig zur Verfügung gestellt werden kann, im Bedarf sogar noch mehr, indem entsprechend das GuD/BHKW mit einer höheren Leistung betrieben wird als notwendig.

Wie in Fig. 1b dargestellt, besteht zwischen der Erzeugungseinheit des Kombikraftwerks, also z. B. dem Windpark einerseits und der Power-to-Gas-Einheit andererseits eine Kommunikations- und/oder Datenleitung. Über diese Kommunikations- und Datenleitung können folgende Daten zwischen den Einheiten des Kombikraftwerks ausgetauscht werden, um somit den Windpark einerseits und/oder die Power-to-Gas-Einheit andererseits zu steuern.

Wenn beispielsweise die Windenergieanlage bzw. der Windpark ohnehin ständig die Frequenz des elektrischen Netzes erfasst und misst und dabei ebenfalls ständig den Frequenzabfall, also den negativen Frequenzgradienten (Ableitung der Frequenz nach der Zeit; df/dt) erfasst, so werden die entsprechenden Werte für die Netzfrequenz (absoluter Wert) bzw. für den Netzabfall (Frequenzgradienten) der Steuerungseinrichtung der Power-to-Gas-Einheit übertragen. Es ist aber auch möglich, aus dem Vorliegen bestimmter vorbestimmter Frequenzwerte bzw. Frequenzgradientenwerte, einen entsprechenden Schaltbefehl zum Stopp der Power-to-Gas-Einheit bereits im Windpark zu erzeugen und dann diesen Schaltbefehl an die Power-to-Gas-Einheit zu übermitteln. Auch ist es möglich, dass die Erzeugungseinheit, also der Windpark, den aktuellen Wert für die aktuell erzeugte elektrische Leistung an die Power-to-Gas-Einheit überträgt, so dass diese stets so gefahren wird, dass nicht mehr elektrische Leistung verbraucht wird als die Erzeugungseinheit erzeugt.

Auch ist es vorteilhaft, wenn die Power-to-Gas-Einheit ihrerseits stets den Wert der aktuellen elektrischen Verbrauchsleistung der gesamten Power-to-Gas-Einheit an die Erzeugungseinheit übermittelt, damit diese entsprechend gesteuert werden kann.

Es ist auch vorteilhaft, wenn der Windpark und/oder die Power-to-Gas-Einheit über einen Dateneingang verfügt, so dass durch eine Steuerung oder die Zentrale zur Steuerung eines Netzes stets vorgegeben werden kann, welche Leistung die Power-to-Gas-Einheit beziehen soll, so dass diese Leistung sicher als Leistung zur Netzstützung zur Verfügung steht, falls ein vorbestimmter Netzfrequenzwert unterschritten wird und/oder ein vorbestimmter Netzfrequenzabfall, also ein vorbestimmter Frequenzgradient, vorliegt.

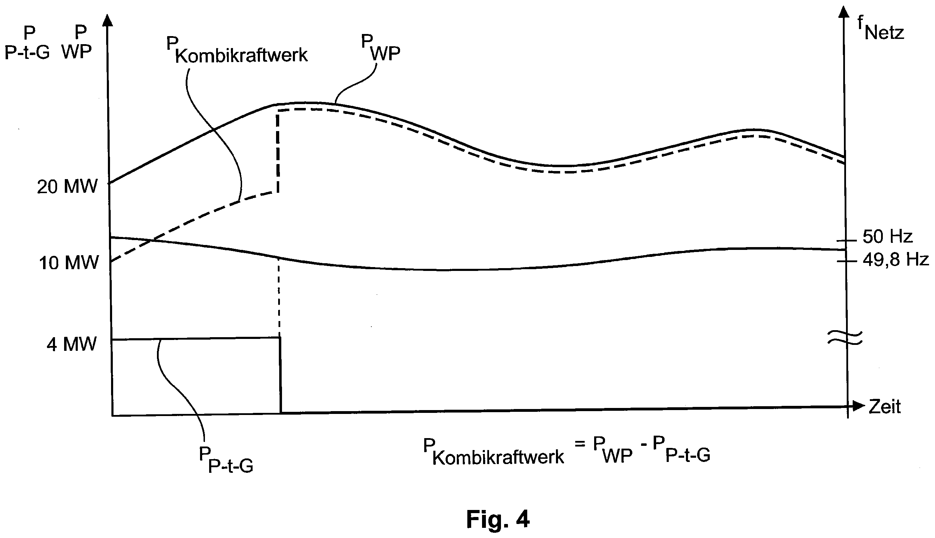

In Fig. 4 ist dargestellt, dass die Power-to-Gas-Einheit eine bestimmte elektrische Leistung (P_{P-t-G}) bezieht, solange die Netzfrequenz oberhalb eines bestimmten Wertes liegt, z. B. oberhalb von 49,8 Hz. Wird der Wert von 49,8 Hz erreicht oder unterschritten, wird also ein vorbestimmter Unterfrequenzwert erreicht, wird der Leistungsbezug der Power-to-Gas-Einheit gestoppt durch Ausschalten bzw. Öffnen der Schalter der Elektrolyse der Power-to-Gas-Einheit 23 und somit steht die zuvor verbrauchte elektrische Leistung der Power-to-Gas-Einheit sofort dem elektrischen Netz zur Verfügung, weil die zuvor verbrauchte Leistung nicht mehr vom Netz abgerufen wird. Mithin kann sich die Frequenz relativ schnell wieder erholen, in jedem Fall wird für den vorbestimmten vorbeschriebenen Unterfrequenzfall das Netz durch Stoppen des elektrischen Verbrauchs der Power-to-Gas-Einheit gestützt.

Wenn die Power-to-Gas-Einheit dabei Teil eines Kombikraftwerks ist, wobei das Kombikraftwerk eine Erzeugungseinheit z. B. aus einem Windpark aufweist, stellt das Kombikraftwerk eine Leistung dem elektrischen Netz zur Verfügung, welche sich berechnet aus der Differenz der erzeugten Leistung der Erzeugungseinheit, z. B. also der Leistung des Windparks, und der verbrauchten Leistung der Power-to-Gas-Einheit. Sobald also der Unterfrequenzwert von 49,8 Hz erreicht wird, sinkt der Leistungsverbrauch der Power-to-Gas-Einheit auf "Null". Da der Windpark im dargestellten Beispiel stets eine elektrische Leistung erzeugt, beträgt die elektrische Leistung, die das Kombikraftwerk dann, wenn der Bezug elektrischer Leistung durch die Power-to-Gas-Einheit gestoppt wird, gleich der elektrischen Leistung des gesamten Windparks und somit wird ein deutlich größerer Anteil elektrischer Leistung bei Erreichen des Unterfrequenzwertes dem elektrischen Netz zur Verfügung gestellt. Die Leistung des Kombikraftwerks ist in Fig. 4 durch die gestrichelte Linie (P_{Kombikraft-werk}) dargestellt.

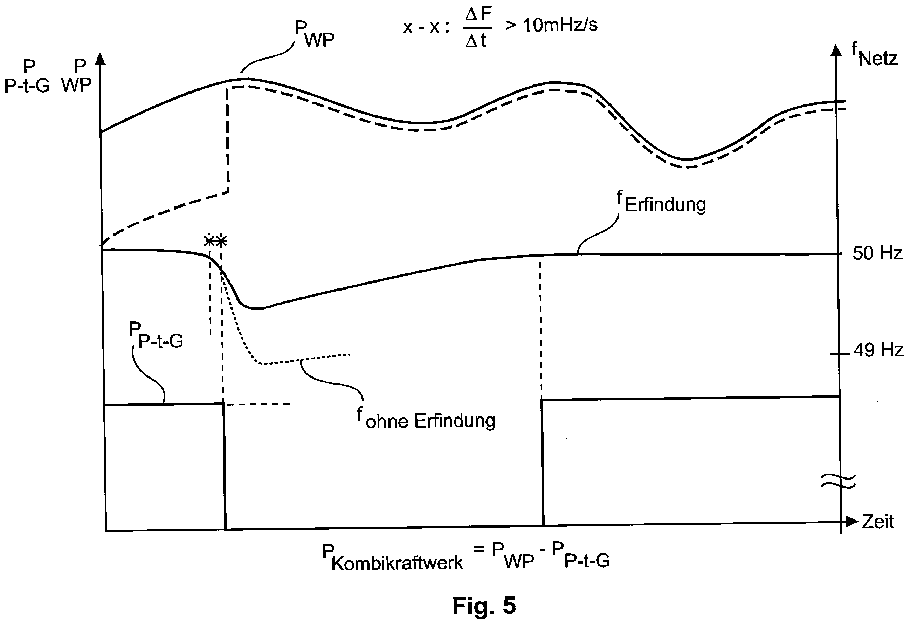

In Fig. 5 ist ein Beispiel gezeigt, bei dem das auslösende Ereignis zum Stopp des Leistungsbezugs durch die Power-to-Gas-Einheit nicht das Unterschreiten eines vorbestimmten Netzfrequenzwertes ist, sondern bei der das Auslösereignis im Vorliegen eines vorbestimmten Frequenzabfalles besteht, also eines Frequenzgradienten. Überschreitet dieser beispielsweise einen Wert von 10 mHz/sec., fällt also die Frequenz innerhalb einer Sekunde um mehr als 10 Milliherz ab, wird dies als Schaltsignal aufgefasst und somit der Leistungsbezug durch die Power-to-Gas-Einheit durch Öffnen der Schalter (des Gleichrichters) der Power-to-Gas-Einheit gestoppt oder der Leistungsbezug wird um einen vorbestimmten Wert reduziert. Mithin steht in kürzester Zeit, also innerhalb von wenigen Millisekunden, z. B. 5 bis 10 msec., wesentlich mehr elektrische Leistung im Netz zur Verfügung, weil mit dem Stopp des Energiebezugs durch die Power-to-Gas-Einheit die gesamte elektrische Leistung des Kombikraftwerks dem Netz als elektrische Leistung zur Verfügung gestellt werden kann, während vor dem auslösenden Schaltereignis noch die Power-to-Gas-Einheit einen bestimmten Leistungsbetrag der elektrischen erzeugten Leistung von der Erzeugungseinheit bezogen hat.

Die punktierte Linie( P_{ohne Erfindung}) zeigt in Fig. 5 dabei an, wie sich die Frequenz verhalten würde, wenn die Power-to-Gas-Einheit nicht bei Vorliegen eines bestimmten Frequenzabfalls gestoppt würde, also keine Energie mehr weiter beziehen würde, sondern weiterhin wie zuvor elektrische Energie beziehen würde. Wie zu erkennen, führt also der Stopp des Energiebezugs durch die Power-to-Gas-Einheit in erheblicher Weise zur Netzstützung, weil damit verhindert wird, dass überhaupt die 49-Hz-Grenze erreicht wird, bei welcher spätestens durch die Netzsteuerung weitere Verbraucher "fallengelassen" würden bzw. weggeschaltet würden, um das Netz zu stützen.

Es versteht sich von selbst, dass sowohl das Schaltkriterium gemäß Fig. 4 als das Schaltkriterium gemäß Fig. 5 in ein und der gleichen Anlage (oder Windpark) ausgebildet sein können und auch ist es darüber hinaus möglich, dass solange die Power-to-Gas-Einheit elektrische Energie bezieht, dass diese so eingestellt wird, dass damit eine Verstetigung der Einspeisung der elektrischen Energie des Kombikraftwerks in das elektrische Netz einhergeht.

Mit der beschriebenen Power-to-Gas-Einrichtung, wie aber auch mit jeder anderen Power-to-Gas-Einrichtung, ist es auch möglich, Windenergieanlagen mit deutlich weniger Einsatz konventioneller Energien wie z. B. Öl, Diesel etc. zu errichten. Dazu wird zunächst am Ort, dort also, wo die Windenergieanlagen, der Windpark oder dergleichen, errichtet werden, eine kleinere Windenergieanlage aufgestellt und diese wird dann an eine Power-to-Gas-Einheit angeschlossen, so dass bei deren Betrieb ständig Gas erzeugt wird. Dieses Gas wird dann auf der Baustelle, also dort, wo die Windenergieanlagen, der Windpark oder dergleichen, errichtet wird, den dort befindlichen Aggregaten, also z. B. Kränen, zur Verfügung gestellt, die mit diesem Gas betrieben werden, so dass dann im Ergebnis zur Errichtung der Windenergieanlagen, des Windparks oder dergleichen kaum mehr fossile Brennstoffe eingesetzt werden müssen, sondern diese Aggregate wie Kräne, Lkw oder dergleichen mit dem Gas, also mit dem Brennstoff betrieben werden, der am Ort der Errichtung der Windenergieanlagen durch eine Power-to-Gas-Einheit erzeugt wird.

Natürlich ist es auch möglich, dass der notwenige Brennstoff, also das Gas, mittels einer Power-to-Gas-Einheit erzeugt wird, die an einer in der näheren Nachbarschaft installierten Windenergieanlage angeschlossen ist.

Es ist dann auch vorteilhaft, wenn am Ort der Errichtung der Windenergieanlagen ein Gasspeicher ausgebildet wird, der ständig mit Gas befüllt wird, so dass die Energieverbraucher wie Kräne, Lkw etc. ständig auch mit Gas weiter betankt werden können und somit wird durch die Power-to-Gas-Einheit die Energiebilanz eines Windenergieanlagenprojekts nochmals deutlich verbessert, insbesondere auch die CO₂-Bilanz.

Gemäß Anspruch 1 der vorliegenden Anmeldung wird beschrieben, dass die Power-to-Gas-Einheit den Bezug elektrischer Leistung um einen vorbestimmten Wert reduziert oder gar keine elektrische Leistung bezieht, wenn die Netzfrequenz des elektrischen Netzes um einen vorbestimmten Frequenzwert unterhalb der gewünschten Sollfrequenz des Netzes liegt und/oder wenn die Netzfrequenz mit einem Frequenzgradienten, nämlich mit einer Änderung pro Zeit (Δf/Δt) fällt, deren Betrag einen vorbestimmten Änderungsbetrag überschreitet. Im Ergebnis wird also der Energiebezug der Power-to-Gas-Einheit abhängig davon gesteuert, wie sich der Netzparameter "Frequenz" im elektrischen Netz entwickelt.

Alternativ und über Anspruch 1 hinausgehend ist mittels der Erfindung auch möglich, den Energiebezug und damit den Betrieb der Power-to-Gas-Einheit abhängig von weiteren Netzparametern zu steuern wie beispielsweise Überfrequenz, Netzunterspannung, Netzüberspannung, Blindleistungsbedarf, Kurzschluss, fault-ride-through, zero-ride-through im Netz etc.

Bei solchen sogenannten "Netzevents", wenn also die Netzparameter wie Frequenz, Spannung, Blindleistung etc. einen bestimmten Wert über- oder unterschreiten, wird regelmäßig die Leistung der Windenergieanlage reduziert. Nunmehr kann mittels der Erfindung die Leistung der Windenergieanlagen auf ihrem Maximum gehalten werden und die Reduktion der in das Netz eingespeisten Leistung kann erfindungsgemäß dadurch erreicht werden, indem abhängig von den vorgenannten Netzparametern, also deren An- oder Überstieg über bestimmte Netzparameterwerte, die Power-to-Gas-Einheit den Energiebezug und damit also die Gasproduktion, die die Power-to-Gas-Einheit erzeugt, abhängig gemacht wird von dem Überschreiten oder Unterschreiten bestimmter Netzspannungen, Kurzschlüsse oder dem Überschreiten einer Netzfrequenz etc.

Wenn eine Power-to-Gas-Einheit angeschlossen ist und erfindungsgemäß mit ca. 90% (± 5%) ihrer Nennleistung betrieben wird, kann also die Bezugsleistung der Power-to-Gas-Einrichtung nochmals abhängig von den vorbeschriebenen Netzparametern gesteigert werden, so dass weniger elektrische Leistung der Windenergieanlagen in das Netz eingespeist wird, gleichzeitig aber die Gasproduktion erhöht wird, so dass nicht wie bisher die Leistung der Windenergieanlagen reduziert wird und somit ein Teil der potentiell zu erzeugenden elektrischen Energie nicht abgerufen und nicht ins Netz eingespeist wird. Mittels der Erfindung kann also der steuernde Eingriff in die Windenergieanlage verringert werden und alleine durch den Betrieb der Power-to-Gas-Einrichtung und deren höherer elektrischer Leistungsverbrauch und somit höherer Gaserzeugung wird eine elektrische Leistungsreduktion der ins Netz eingespeisten Leistung der Windenergieanlage erreicht. Das hat vor allem zur Folge, dass die Windenergieanlage (oder ein Windpark) ohne Steuerungseingriff weiterbetrieben werden kann und das gesamte System keine Energieverluste erzeugt, falls bestimmte Netzparameter außerhalb ihres Sollbereichs liegen und eine Reduktion der in das Netz eingespeisten elektrischen Leistung erforderlich ist. Im Falle eines Kurzschlusses muss die Windenergieanlage normalerweise ihre Leistung sofort drastisch reduzieren, möglicherweise sogar auf "Null" begrenzen. Ein solcher Eingriff bedeutet für die Windenergieanlage einen ungeheuren Steuerungseingriff, welcher nur schwer zu bewältigen ist. Wenn eine Power-to-Gas-Einrichtung an die Windenergieanlage angeschlossen ist, kann im Falle eines Netzkurzschlusses die elektrische Leistung der Windenergieanlage weitestgehend komplett der Power-to-Gas-Einrichtung zugeführt werden, so dass die Windenergieanlage zunächst einmal weiterbetrieben werden kann.

Wenn beispielsweise eine Power-to-Gas-Einrichtung betrieben wird und diese auch im Normalbetrieb ihre Leistung nicht nur von einer Windenergieanlage bezieht, sondern auch direkt aus dem Netz bezieht, fällt im Kurzschlussfall der elektrische Energiebezug aus dem Netz weg, so dass also hinreichend Potential besteht, dass nunmehr die Power-to-Gas-Einheit optimal mit ihrer bestmöglichen Leistung weiterbetrieben werden kann und die gesamte Leistung der Power-to-Gas-Einheit dann von der Windenergieanlage zur Verfügung gestellt wird.

Auch an diesem Beispiel ist deutlich zu erkennen, dass somit ein sehr anspruchsvoller steuernder Eingriff in die Windenergieanlage im Falle eines Netzkurzschlusses wiederum entfallen kann oder deutlich milder ausgestaltet werden kann und dies erhöht letztlich die Zuverlässigkeit der Windenergieanlage und ermöglicht es auch, dass nicht unnötig elektrische Leistung der Windenergieanlage abgedrosselt wird.

Wenn sich dann der Netzkurzschluss oder ein entsprechender Event aufhebt, kann dann die Windenergieanlage sofort wieder elektrische Leistung in das Netz einspeisen und somit das Netz stützen. Für den Übergang ist es auch durchaus möglich, dass die Windenergieanlage dann primär zunächst einmal das Netz wieder stützt und weniger elektrische Leistung der Power-to-Gas-Einheit zur Verfügung stellt, was letztlich nicht ins Gewicht fällt, denn die Stabilisierung des elektrischen Netzes steht regelmäßig immer im Vordergrund und sobald diese Stabilität des elektrischen Netzes wiederhergestellt ist, kann die Power-to-Gas-Einheit wie auch die Windenergieanlage wieder ihren regulären Betrieb fortsetzen.

Mithin erlaubt die Erfindung also auch ein Verfahren zum Betreiben einer Power-to-Gas-Einrichtung, also einer Einrichtung, welche aus elektrischer Energie ein Gas, z. B. Wasserstoff und/oder Methan oder dergleichen erzeugt, wobei die Power-to-Gas-Einheit zur Erzeugung des Gases elektrische Energie aus einem elektrischen Netz, an welches die Power-to-Gas-Einheit angeschlossen ist, bezieht, wobei das Netz eine vorbestimmte Sollfrequenz bzw. einen Sollfrequenzbereich aufweist, wobei im Falle eines Netzkurzschlusses die Power-to-Gas-Einheit elektrische Leistung aus einer mit der Power-to-Gas-Einheit verbundenen Windenergieanlage oder einem Windpark, also einer Ansammlung von Windenergieanlagen, bezieht und für den Fall, dass der Netzkurzschluss aufgehoben wird, die Windenergieanlagen dann zur Netzstützung wiederum elektrische Energie in das Netz einspeisen und im Bedarfsfall die Power-to-Gas-Einheit zeitweilig weniger elektrische Leistung bezieht als zu ihrem Nennleistungsbetrieb notwendig ist, um letztlich auch somit einen Beitrag zur Netzstützung zu leisten.

Die vorstehende Beschreibung der Erfindung gilt nicht nur für einen Netzkurzschluss, sondern auch für die Fälle (Netz"events") von "fault-ride-through", "zero-ride-through" usw. Schließlich kann mittels der Erfindung eine Power-to-Gas-Einrichtung so betrieben werden, dass ein Windpark letztlich nur eine bestimmte Mindestleistung ständig anbietet und somit der gesamte Windpark als verlässliche Netzgröße für die elektrische Leistungsproduktion erachtet werden kann. Jede weitere elektrische Energie, die der Windpark über die Mindestleistung hinaus erzeugt, wird also dann der Power-to-Gas-Einheit zugeführt.

Die vorstehenden Alternativen zur Erfindung nach Anspruch 1 können ohne Weiteres umgesetzt werden, wenn eine Steuerung existiert, der die Netzparameter, also die Parameter für Frequenz, Spannung, Strom etc., im Netz zugeführt werden (diese Netzparameter werden üblicherweise ohnehin schon ständig gemessen) und die dann die Steuerung und Energieverteilung der Windenergieanlagen (oder eines Windparks) und die einer Power-to-Gas-Einheit übernimmt. Eine weitere, auch ganz eigenständige Alternative oder auch eine Ergänzung zu vorbeschriebener Erfindung kann auch darin bestehen, dass die Gasproduktion der Power-to-Gas-Einheit mit einer STATCOM-Anlage gesteuert wird. Ein solcher STATCOM ist regelmäßig ein Static Synchronous Compensator, also ein Stromrichterimpulsbetrieb, der ein dreiphasiges Spannungs-System mit variabler Spannungsamplitude, dessen Spannung um 90° gegenüber den entsprechenden Leitungsströmen phasenverschoben sind, generiert. Somit kann induktive oder kapazitive Blindleistung zwischen dem STATCOM und dem Netz ausgetauscht werden. Das STATCOM zählt im Bereich der Leistungselektronik zu den flexiblen Drehstromübertragungssystemen (Flexible A/C Transmission Systems (FATS)) und bietet gegenüber der funktionell ähnlichen statischen Blindleistungskompensation Vorteile bei der Stabilisierung von Wechselspannungsnetzen, da seine Blindleistung nicht von der Höhe der Netzwechselspannung abhängt.

Wird also nun der Betrieb der Power-to-Gas-Einheit und somit die Gasproduktion dieser Power-to-Gas-Einheit mit einer STATCOM-Anlage gesteuert, bezieht zunächst einmal die Power-to-Gas-Einrichtung ihre elektrische Energie von der STATCOM-Anlage, welche auch gleichzeitig mit dem Netz verbunden sein kann. Damit kann dann abhängig von den aktuellen Tarifen, nämlich einerseits von dem Vergütungstarif für elektrische Leistung, die in das Netz eingespeist wird und dem aktuellen Tarif für Methangas andererseits, eine Entscheidung darüber herbeigeführt werden, wieviel elektrische Leistung des Windparks (der seine Leistung über die STATCOM-Anlage in das Netz einspeist) in das Netz und wieviel elektrische Leistung des Windparks in die CH₄-Produktion eingebracht wird. Mithin wird mit einer solchen Lösung ein Verfahren zum Betreiben einer Power-to-Gas-Einrichtung möglich, welche mit einer STATCOM-Anlage verbunden ist, welche ihrerseits mit einem Windpark und mit einem Netz verbunden ist und eine Steuerung aufweist, welche aktuelle Tarife, z. B. den Vergütungstarif für elektrische Leistung, die in das Netz eingespeist wird einerseits und den aktuellen Tarif für Methangas andererseits, verarbeitet und eine Netzeinspeisung der elektrischen Energie oder die Produktion von Gas in der Power-to-Gas-Einheit darüber steuert, je nachdem, welcher Tarif gerade besser ist, nämlich entweder für die elektrische Leistung, die in das Netz eingespeist wird oder für die Methangasproduktion, so dass das Verhältnis, wieviel elektrische Leistung des Windparks in das Netz und wieviel elektrische Leistung des Windparks in der Power-to-Gas-Einheit und somit in der CH₄-Produktion zugeführt wird, abhängig von den jeweils aktuellsten Tarifen möglich ist und eingestellt wird. Die STATCOM-Anlage ist mithin ein ideales Werkzeug, die Leistungsverteilung (Energieverteilung) zwischen Netzeinspeisung und Power-to-Gas-Einheitsbetrieb und somit der Zuführung von elektrischer Leistung der Power-to-Gas-Einheit jederzeit verändernd neu vorzunehmen, ohne in die Leistungsproduktion der Windenergieanlage selbst eingreifen zu müssen. Es ist weiterhin auch möglich, dass die STATCOM-Anlage auch mit einer elektrischen Speichereinrichtung, z. B. Akkumulatorbatterie etc. verbunden ist, so dass dann eine weitere Möglichkeit besteht, elektrische Energie zwischenzuspeichern, um diese später aus dem elektrischen Speicher wieder abzurufen und in das Netz einzuspeisen oder der Power-to-Gas-Einheit zur Produktion von CH₄ zuzuführen.

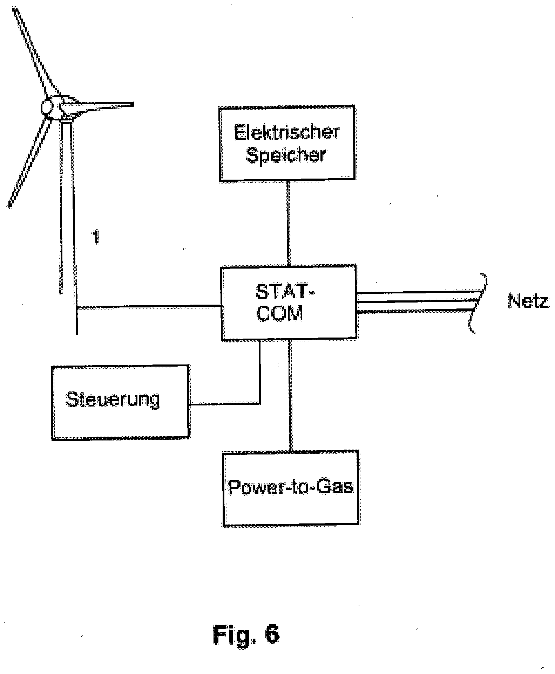

Fig. 6 zeigt ein Blockschaltbild einer solchen STATCOM-Anwendung mit einer Windenergieanlage 1, einem elektrischen Speicher, einer Steuerung, einer Power-to-Gas-Einheit und einem Netz. Es ist zu erkennen, dass die STATCOM-Anlage mit dem elektrischen Speicher und/oder mit der Power-to-Gas-Einheit und der Windenergieanlage 1 und dem Netz verbunden ist und über eine Steuerung verfügt, die die vorbeschriebenen Kriterien erfüllt.

## Patentansprüche

1. Verfahren zum Betreiben einer Power-to-Gas-Einrichtung,
also einer Einrichtung, welche aus elektrischer Energie ein Gas, z. B. Wasserstoff und/oder Methan und/oder dergleichen erzeugt,
wobei die Power-to-Gas-Einheit zur Erzeugung des Gases elektrische Energie aus einem elektrischen Netz, an welches die Power-to-Gas-Einheit angeschlossen ist, bezieht,
wobei die Power-to-Gas-Einheit (23) mit einer Windenergieanlage (1) oder einem Windpark gekoppelt ist und die Power-to-Gas-Einheit (23) und die Windenergieanlage (1) und/oder der Windpark ein Combi-Kraftwerk bilden und als solches betrieben werden, sodass die elektrische Energie, die die Power-to-Gas-Einheit (23) bezieht von der Windenergieanlage (1) und/oder dem Windpark erzeugt wird, und
wobei ferner die Windenergieanlage (1) und/oder der Windpark an ein elektrisches Netz angeschlossen ist, in welches die Windenergieanlage (1) und auch der Windpark elektrische Energie einspeist, und
wobei die Windenergieanlage (1) und/oder der Windpark für eine vorbestimmte Dauer eine bestimmte Mindestleistung zuverlässig in das elektrische Netz einspeist und jede weitere elektrische Energie, die die Windenergieanlage (1) und/oder der Windpark über die Mindestleistung hinaus erzeugt, der Power-to-Gas-Einheit (23) zugeführt wird und
wobei eine Steuerung ausgebildet ist, der ein gemessener Wert der Netzfrequenz zugeführt wird und die Steuerung der Energieverteilung der von der Windenergieanlage (1) oder des Windparks erzeugten Energie zwischen Netz einerseits und der Power-to-Gas-Einheit (23) andererseits übernimmt und
wobei die bestimmte Mindestleistung, aus einer Windprognose ermittelt wird, wobei für einen vorbestimmten Prognosezeitraum eine zuverlässige Prognoseleistung als die bestimmte Mindestleistung ermittelt, die dem Netz zuverlässig und konstant für den Prognosezeitraum zur Verfügung gestellt werden kann.

2. Verfahren nach Anspruch 1,
**dadurch gekennzeichnet, dass** die Power-to-Gas-Einheit dann, wenn die elektrische Netzfrequenz einen bestimmten ersten Netzfrequenzwert erreicht oder unterhalb liegt, die Power-to-Gas-Einheit nur noch eine minimale Leistung oder gar keine Leistung mehr aus dem elektrischen Netz bezieht.

3. Verfahren nach Anspruch 2,
**dadurch gekennzeichnet, dass** der vorbestimmte Frequenzwert um 1 ‰, vorzugsweise um 2 ‰, besonders vorzugsweise um 3 ‰ oder mehr unterhalb der Netzsollfrequenz, z. B. 50 Hz, liegt und/oder dass der vorbestimmte Änderungsbetrag größer ist als 0,1 Hz/sek., insbesondere im Bereich von 0,2 bis 7 Hz/sec.. liegt, vorzugsweise im Bereich von 0,5 bis 2 Hz/sec. liegt.

4. Verfahren nach einem der vorhergehenden Ansprüche,
**dadurch gekennzeichnet, dass** die Power-to-Gas-Einheit mit einer Windenergieanlage oder einem Windpark, bestehend aus beispielsweise Windenergieanlagen, gekoppelt ist und die Power-to-Gas-Einheit und die Windenergieanlage und/oder der Windpark ein Kombikraftwerk bilden und vorzugsweise als solches betrieben werden, so dass die elektrische Energie, die die Power-to-Gas-Einheit bezieht, von der Windenergieanlage und/oder dem Windpark erzeugt wird.

5. Kombikraftwerk, bestehend aus einer Windenergieanlage und/oder einem Windpark, bestehend aus einer Vielzahl von Windenergieanlagen einerseits und einer Power-to-Gas-Einheit (23) andererseits,
wobei die Windenergieanlage und/oder der Windpark bei gegebenen Windverhältnissen elektrische Energie erzeugt und in ein angeschlossenes elektrisches Netz einspeist und die Power-to-Gas-Einheit einen bestimmten, vorbestimmten Anteil der durch die Windenergieanlage und/oder Windpark erzeugten elektrischen Energie aufnimmt und zur Produktion eines Brennstoffs, z. B. Wasserstoff, Methan oder dergleichen verwendet, und
wobei die Windenergieanlage (1) und/oder der Windpark für eine vorbestimmte Dauer eine bestimmte Mindestleistung zuverlässig in das elektrische Netz einspeist und jede weitere elektrische Energie, die die Windenergieanlage (1) und/oder der Windpark über die Mindestleistung hinaus erzeugt, der Power-to-Gas-Einheit (23) zugeführt wird und
wobei eine Steuerung ausgebildet ist, der ein gemessener Wert der Netzfrequenz zugeführt wird und die Steuerung der Energieverteilung der von der Windenergieanlage (1) oder des Windparks erzeugten Energie zwischen Netz einerseits und der Power-to-Gas-Einheit (23) andererseits übernimmt und
wobei die bestimmte Mindestleistung, aus einer Windprognose ermittelt wird, wobei für einen vorbestimmten Prognosezeitraum eine zuverlässige Prognoseleistung als die bestimmte Mindestleistung ermittelt, die dem Netz zuverlässig und konstant für den Prognosezeitraum zur Verfügung gestellt werden kann.

6. Kombikraftwerk nach Anspruch 5,
**dadurch gekennzeichnet, dass** die Power-to-Gas-Einheit mit der Windenergieanlage und/oder dem Windpark elektrisch gekoppelt ist, z. B. durch eine Stromleitung und die elektrische Energie, die die Power-to-Gas-Einheit für ihren Betrieb benötigt, entweder direkt aus der Windenergieanlage oder dem Windpark oder deren Ausgang bezogen wird oder die Power-to-Gas-Einheit die elektrische Energie zum Betrieb der Power-to-Gas-Einheit aus dem elektrischen Netz bezieht, mit welchem es verbunden ist und in welches die Windenergieanlage oder der Windpark die erzeugte elektrische Energie einspeist.

7. Kombi-Kraftwerk nach einem der vorhergehenden Ansprüche,
wobei die Power-to-Gas-Einheit den Bezug elektrischer Leistung um einen vorbestimmten Wert reduziert oder keine elektrische Leistung bezieht, wenn die Netzfrequenz des elektrischen Netzes um einen vorbestimmten Frequenzwert unterhalb der gewünschten Sollfrequenz des Netzes liegt und/oder wenn die Netzfrequenz mit einem Frequenzgradienten, nämlich mit einer Änderung pro Zeit (Δf/Δt) fällt, deren Betrag einen vorbestimmten Änderungsbetrag überschreitet.

## Claims

1. Method for operating a power-to-gas unit,
i.e. a unit which generates a gas, e.g. hydrogen and/or methane and/or the like, from electrical energy,
wherein the power-to-gas unit draws electrical energy from an electrical grid to which the power-to-gas unit is connected to generate the gas,
wherein the power-to-gas unit (23) is coupled to a wind turbine (1) or a wind farm and the power-to-gas unit (23) and the wind turbine (1) and/or the wind farm form a combined cycle power plant and are operated as such, so that the electrical energy drawn by the power-to-gas unit (23) is generated by the wind turbine (1) and/or the wind farm, and
wherein further the wind turbine (1) and/or the wind farm being connected to an electrical grid into which the wind turbine (1) and also the wind farm feed electrical energy, and
wherein the wind turbine (1) and/or the wind farm reliably feeds a certain minimum power into the electrical grid for a predetermined duration and any further electrical energy generated by the wind turbine (1) and/or the wind farm in excess of the minimum power is fed to the power-to-gas unit (23), and
wherein a controller is formed to which a measured value of the grid frequency is fed and which takes over the control of the energy distribution of the energy generated by the wind turbine (1) or the wind farm between the grid on the one hand and the power-to-gas unit (23) on the other hand, and
wherein the certain minimum power is determined from a wind forecast, wherein a reliable forecast power is determined as the certain minimum power for a predetermined forecast period, which can be provided to the grid reliably and constantly for the forecast period.

2. Method according to claim 1,
**characterized in that** the power-to-gas unit draws only a minimum power or no power at all from the electrical grid when the electrical grid frequency reaches or is below a certain first grid frequency value.

3. Method according to claim 2,
**characterized in that** the predetermined frequency value is 1 ‰, preferably 2 ‰, particularly preferably 3 ‰ or more below the nominal grid frequency, e.g. 50 Hz, and/or **in that** the predetermined amount of change is greater than 0.1 Hz/sec, particularly in the range from 0.2 to 7 Hz/sec, preferably in the range from 0.5 to 2 Hz/sec.

4. Method according to one of the preceding claims,
**characterized in that** the power-to-gas unit is coupled to a wind turbine or a wind farm, consisting for example of wind turbines, and the power-to-gas unit and the wind turbine and/or the wind farm form a combined cycle power plant and are preferably operated as such, so that the electrical energy drawn by the power-to-gas unit is generated by the wind turbine and/or the wind farm.

5. Combined cycle power plant comprising a wind turbine and/or a wind farm comprising a plurality of wind turbines on the one hand and a power-to-gas unit (23) on the other hand,
wherein the wind turbine and/or the wind farm generates electrical energy under given wind conditions and feeds it into a connected electrical grid and the power-to-gas unit takes a certain predetermined proportion of the electrical energy generated by the wind turbine and/or wind farm and uses it to produce a fuel, e.g. hydrogen, methane or the like, and
wherein the wind turbine (1) and/or the wind farm reliably feeds a certain minimum power into the electrical grid for a predetermined duration and any further electrical energy generated by the wind turbine (1) and/or the wind farm in excess of the minimum power is fed to the power-to-gas unit (23), and
wherein a controller is formed to which a measured value of the grid frequency is fed and which takes over the control of the energy distribution of the energy generated by the wind turbine (1) or the wind farm between the grid on the one hand and the power-to-gas unit (23) on the other hand, and
wherein the certain minimum power is determined from a wind forecast, wherein a reliable forecast power is determined as the certain minimum power for a predetermined forecast period, which can be provided to the grid reliably and constantly for the forecast period.

6. Combined cycle power plant according to claim 5,
**characterized in that** the power-to-gas unit is electrically coupled to the wind turbine and/or the wind farm, for example by a power line, and the electrical energy which the power-to-gas unit requires for its operation is either drawn directly from the wind turbine or the wind farm or its output, or the power-to-gas unit draws the electrical energy for operating the power-to-gas unit from the electrical grid to which it is connected and into which the wind turbine or the wind farm feeds the generated electrical energy.

7. Combined cycle power plant according to one of the preceding claims,
wherein the power-to-gas unit reduces the supply of electrical power by a predetermined value or does not draw any electrical power if the grid frequency of the electrical grid is below the desired nominal frequency of the grid by a predetermined frequency value and/or if the grid frequency falls with a frequency gradient, namely with a change per time (Δf/Δt), the amount of which exceeds a predetermined amount of change.

## Revendications

1. Procédé destiné à faire fonctionner un dispositif électricité-gaz, donc un dispositif qui produit un gaz à partir d'énergie électrique, par exemple de l'hydrogène et/ou du méthane et/ou similaires,
dans lequel l'unité électricité-gaz, pour produire le gaz, prélève de l'énergie électrique à partir d'un réseau électrique, auquel l'unité électricité-gaz est raccordée,
dans lequel l'unité électricité-gaz (23) est couplée à une éolienne (1) ou à un parc éolien et l'unité électricité-gaz (23) et l'éolienne (1) et/ou le parc éolien forment une centrale combinée et fonctionnent en tant que telle si bien que l'énergie électrique que l'unité électricité-gaz (23) reçoit est produite par l'éolienne (1) et/ou le parc éolien, et
dans lequel, en outre, l'éolienne (1) et/ou le parc éolien est/sont raccordé(e)(s) à un réseau électrique dans lequel l'éolienne (1) et également le parc éolien injectent de l'énergie électrique, et
dans lequel l'éolienne (1) et/ou le parc éolien injectent de manière fiable une certaine puissance minimale dans le réseau électrique pendant une durée prédéfinie et toute énergie électrique supplémentaire produite par l'éolienne (1) et/ou le parc éolien au-delà de la puissance minimale est amenée à l'unité électricité-gaz (23) et
dans lequel une commande est réalisée à laquelle une valeur mesurée de la fréquence de réseau est amenée et prend en charge le contrôle de la répartition d'énergie de l'énergie produite par l'éolienne (1) ou le parc éolien entre le réseau d'une part et l'unité électricité-gaz (23) d'autre part et
dans lequel la puissance minimale définie est déterminée à partir d'une prévision de vent, dans lequel, pendant une période de prévision prédéfinie, une puissance de prévision fiable est déterminée comme étant la puissance minimale définie, qui peut être mise à disposition du réseau de manière fiable et constante pendant la période de prévision.

2. Procédé selon la revendication 1,
**caractérisé en ce que**, lorsque la fréquence de réseau électrique atteint ou est inférieure à une première valeur de fréquence de réseau définie, l'unité électricité-gaz ne prélève plus qu'une puissance minimale ou plus aucune puissance du réseau électrique.

3. Procédé selon la revendication 2,
**caractérisé en ce que** la valeur de fréquence prédéfinie est inférieure de 1 ‰, de préférence de 2 ‰, en particulier de préférence de 3 ‰ ou plus à la fréquence de consigne de réseau, par exemple 50 Hz, et/ou **en ce que** la valeur de modification prédéfinie est supérieure à 0,1 Hz/s, en particulier se situe dans la plage de 0,2 à 7 Hz/s, de préférence dans la plage de 0,5 à 2 Hz/s.

4. Procédé selon l'une quelconque des revendications précédentes,
**caractérisé en ce que** l'unité électricité-gaz est couplée à une éolienne ou à un parc éolien, comprenant par exemple des éoliennes, et l'unité électricité-gaz et l'éolienne et/ou le parc éolien forment une centrale électrique combinée et fonctionnent de préférence en tant que telle, de telle sorte que l'énergie électrique que l'unité électricité-gaz reçoit, est produite par l'éolienne et/ou le parc éolien.

5. Centrale électrique combinée, constituée d'une éolienne et/ou d'un parc éolien, constitué d'une pluralité d'éoliennes d'une part et d'une unité électricité-gaz (23) d'autre part,
dans laquelle l'éolienne et/ou le parc éolien produisent de l'énergie électrique dans des conditions de vent données et l'injectent dans un réseau électrique raccordé et l'unité électricité-gaz absorbe une certaine proportion prédéfinie de l'énergie électrique produite par l'éolienne et/ou le parc éolien et l'utilise pour produire un combustible, par exemple de l'hydrogène, du méthane ou similaires, et
dans laquelle l'éolienne (1) et/ou le parc éolien injectent de manière fiable une puissance minimale définie dans le réseau électrique pendant une durée prédéfinie et toute énergie électrique supplémentaire produite par l'éolienne (1) et/ou le parc éolien au-delà de la puissance minimale est amenée à l'unité électricité-gaz (23) et
dans laquelle une commande est réalisée, à laquelle une valeur mesurée de la fréquence de réseau est amenée et prend en charge le contrôle de la répartition d'énergie de l'énergie produite par l'éolienne (1) ou le parc éolien entre le réseau d'une part et l'unité électricité-gaz (23) d'autre part et
dans laquelle la puissance minimale définie est déterminée à partir d'une prévision de vent, dans laquelle, pendant une période de prévision prédéfinie, une puissance de prévision fiable est déterminée comme étant la puissance minimale définie qui peut être mise à disposition du réseau de manière fiable et constante pendant la période de prévision.

6. Centrale électrique combinée selon la revendication 5,
**caractérisée en ce que** l'unité électricité-gaz est couplée électriquement à l'éolienne et/ou au parc éolien, par exemple par une ligne électrique et l'énergie électrique dont l'unité électrique-gaz a besoin pour son fonctionnement soit est fournie directement à partir de l'éolienne ou du parc éolien ou de sa sortie, soit l'unité électricité-gaz prélève l'énergie électrique pour le fonctionnement de l'unité électricité-gaz du réseau électrique auquel elle est connectée et dans lequel l'éolienne ou le parc éolien injecte l'énergie électrique produite.

7. Centrale électrique combinée selon l'une quelconque des revendications précédentes,
dans laquelle l'unité électricité-gaz réduit la fourniture de puissance électrique d'une valeur prédéfinie ou ne prélève pas de puissance électrique lorsque la fréquence de réseau du réseau électrique est inférieure à la fréquence de consigne souhaitée du réseau d'une valeur de fréquence prédéfinie et/ou lorsque la fréquence de réseau chute d'un gradient de fréquence, à savoir d'une variation par temps (Δf/Δt) dont la valeur dépasse une valeur de variation prédéfinie.
